# EUROPEAN PATENT APPLICATION

(11) **EP 4 822 415 A1**
(43) Date of publication of application: **14.10.2026**
(21) Application number: 24900624.8
(22) Date of filing: 03.12.2024
(51) Int. Cl.: G02B 6/44, G02B 6/032

(54) **ANTI-RESONANT HOLLOW-CORE OPTICAL FIBER**

(30) Priority: 04.12.2023 JP 2023204514
(71) Applicant: Sumitomo Electric Industries, Ltd., Osaka-shi, Osaka 541-0041 (JP)
(72) Inventor: SOHMA Kazuyuki, Osaka-shi, Osaka 541-0041 (JP); HAMAKUBO Katsushi, Osaka-shi, Osaka 541-0041 (JP); ENOMOTO Tadashi, Osaka-shi, Osaka 541-0041 (JP)
(74) Representative: TBK
(86) International application number: PCT/JP2024/042754
(87) International publication number: WO 2025/121330

(57) **Abstract**

An anti-resonant hollow-core optical fiber (10) according to one embodiment comprises an outer cladding (11) having a pipe shape, a plurality of inner cladding elements (12) each having a pipe shape and contacting an inner wall surface of the outer cladding (11), and a coating layer (14) covering the outer cladding (11), a space surrounded by the plurality of inner cladding (12) serving as a core region (11d). The average linear expansion coefficient of the outermost layer of the coating layer (14) at 20°C to 30°C is 10×10-5 [/°C] or less, the average linear expansion coefficient of the outermost layer of the coating layer (14) at -60°C to -50°C is 6×10-5 [/°C] or less, and the in-situ elastic modulus of the outermost layer of the coating layer (14) is 1500 MPa or more.

## Description

### TECHNICAL FIELD

The present disclosure relates to an anti-resonant hollow core optical fiber. This application claims priority based on Japanese Patent Application No. 2023-204514 filed on December 4, 2023, the entire contents of which are incorporated herein by reference.

### BACKGROUND ART

In an anti-resonant hollow core optical fiber, as described in, for example, Patent Literature 1 and Non-Patent Literature 1, an inner region of an outer cladding has a cross section structure in which the inner region is continuous along the fiber central axis. Non-Patent Literature 2 describes a hollow core optical fiber in which phase stability against heat is enhanced by reducing the thickness of a coating. Patent Literature 2 describes an optical fiber including a cladding using pure silica or silica doped with fluorine.

### CITATION LIST

### PATENT LITERATURE

Patent Literature 1: International Publication No. WO 2020/217052
Patent Literature 2: U.S. Patent Application Publication No. 2021/0026065 specification

### NON PATENT LITERATURE

Non-Patent Literature 1: GREGORY T. JASION et al., "Fabrication of tubular anti-resonant hollow core fibers: modelling, draw dynamics and process optimization", OPTICS EXPRESS, Vol. 27, No. 15, 22 Jul. 2019, p.20572.
Non-Patent Literature 2: Bo Shi et al., "Thinly coated hollow core fiber for improved thermal phase-stability performance" Optics Letters Vol. 46, No. 20 / 15 Oct. 2021 p.5177-5180.

### SUMMARY OF INVENTION

An anti-resonant hollow core optical fiber according to an aspect of the present disclosure includes an outer cladding having a pipe shape, a plurality of inner cladding elements each having a pipe shape and being in contact with an inner wall surface of the outer cladding, and a coating layer configured to cover the outer cladding. A space surrounded by the plurality of inner claddings is a core region. An outermost layer of the coating layer has an average linear expansion coefficient of 10 × 10⁻⁵ [/°C] or less at 20°C to 30°C. The outermost layer of the coating layer has an average linear expansion coefficient of 6 × 10⁻⁵ [/°C] or less at -60°C to -50°C. The outermost layer of the coating layer has an in-situ elastic modulus of 1500 MPa or more.

### BRIEF DESCRIPTION OF THE DRAWINGS

FIG. 1 is a diagram showing a structure of an anti-resonant hollow core optical fiber according to an embodiment.
FIG. 2 is a graph showing an example of a relationship between temperature and an average linear expansion coefficient.

### DETAILED DESCRIPTION

When an anti-resonant hollow core optical fiber is used, the transmission delay of optical signal can be reduced, and high-speed and large-capacity communication can be performed. However, in the anti-resonant hollow core optical fiber, the phase sensitivity of the optical signal may be increased due to the expansion of a coating under the influence of heat. A delay may occur in the phase of the optical signal due to the influence of heat.

An object of the present disclosure is to provide an anti-resonant hollow core optical fiber in which the phase delay that occurs in optical signal can be reduced.

According to the present disclosure, the phase delay that occurs in the optical signal can be reduced by suppressing the influence of heat.

### [Description of Embodiments of Present Disclosure]

First, embodiments of the present disclosure will be listed and described. (1) An anti-resonant hollow core optical fiber according to an embodiment includes an outer cladding having a pipe shape, a plurality of inner cladding elements each having a pipe shape and being in contact with an inner wall surface of the outer cladding, and a coating layer configured to cover the outer cladding. A space surrounded by the plurality of inner claddings is a core region. An outermost layer of the coating layer has an average linear expansion coefficient of 10 × 10⁻⁵ [/°C] or less at 20°C to 30°C. The outermost layer of the coating layer has an average linear expansion coefficient of 6 × 10⁻⁵ [/°C] or less at - 60°C to -50°C. The outermost layer of the coating layer has an in-situ elastic modulus of 1500 MPa or more.

In the anti-resonant hollow core optical fiber described above, the linear expansion coefficient of the outermost layer of the coating layer is reduced, so that the influence of heat is suppressed, the phase delay that occurs in the optical signal can be reduced, and thus the temperature characteristics of the anti-resonant hollow core optical fiber can be improved.

(2) In the above (1), the coating layer may have a thickness of 15 µm or more. In this case, the delay time of the phase can be more reliably reduced, and the external damage resistance can be enhanced.

(3) In the above (1) or (2), the coating layer may include a primary resin layer and a secondary resin layer covering an outer periphery of the primary resin layer. The primary resin layer may have an in-situ elastic modulus of 10 MPa or less. In this case, the primary resin layer having an in-situ elastic modulus of 10 MPa or less is provided inside the secondary resin layer. Thus, the anti-resonant hollow core optical fiber can enhance side pressure resistance while maintaining excellent temperature characteristics.

(4) In the above (3), the primary resin layer may have a thickness of 3 µm to 20 µm. In this case, the primary resin layer has a thickness of 3 µm or more, and this allows the primary resin layer to sufficiently exhibit the function as the primary resin layer. Since the primary resin layer has a thickness of 20 µm or less, the outermost layer of the coating having a small linear expansion coefficient can be relatively thicker. As a result, the influence of heat can be suppressed.

(5) In any one of (1) to (4), the outermost layer of the coating layer may contain an inorganic oxide.

### [Details of Embodiments of Present Disclosure]

Specific examples of the anti-resonant hollow core optical fiber of the present disclosure are described below with reference to the drawings. The present invention is not limited to these examples, but is defined by the scope of the claims, and is intended to include all modifications within the meaning and scope equivalent to the claims. In the description of the drawings, the same or corresponding elements are denoted by the same reference numerals, and redundant description thereof will be omitted as appropriate. The drawings may be simplified or exaggerated as appropriate for ease of understanding, and the dimensional ratios and the like are not limited to those shown in the drawings.

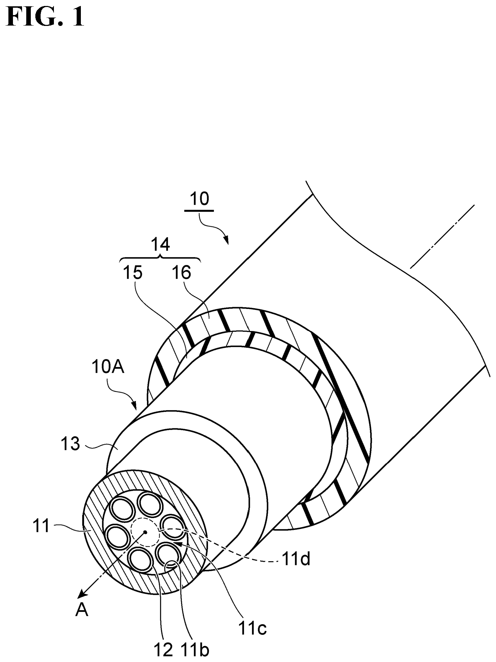

FIG. 1 is a diagram showing a structure of an anti-resonant hollow core optical fiber 10 according to an embodiment. As shown in FIG. 1, the anti-resonant hollow core optical fiber 10 includes an outer cladding 11, a plurality of inner cladding elements 12, a jacket layer 13, and a coating layer 14.

The outer cladding 11 functions as an optical cladding. The outer cladding 11 has a pipe shape. The outer cladding 11 extends along a central axis A of the anti-resonant hollow core optical fiber 10. The outer cladding 11 has an inner wall surface 11b. An inner region 11c defined by the inner wall surface 11b of the outer cladding 11 corresponds to an inner region of the anti-resonant hollow core optical fiber 10.

The plurality of inner cladding elements 12 are provided in the inner region 11c of the outer cladding 11. The number of the inner cladding elements 12 is six as an example. The inner cladding elements 12 function as trench layers. The plurality of inner cladding elements 12 are arranged so as to surround a space to be a core region 11d in a state of being in contact with the inner wall surface 11b of the outer cladding 11. The core region 11d functions as a hollow optical waveguide region. The space to be the core region 11d extends along the central axis A.

The jacket layer 13 to be a physical cladding is provided on the outer periphery of the outer cladding 11, for example. For example, a glass fiber 10A includes the outer cladding 11, the plurality of inner cladding elements 12, and the jacket layer 13. The glass fiber 10A has a diameter of 170 µm, for example.

The coating layer 14 is provided on the outer periphery of the jacket layer 13. The coating layer 14 is made of an ultraviolet curable resin. The coating layer 14 has a thickness of 15 µm or more, for example. The anti-resonant hollow core optical fiber 10 (coating layer 14) has a diameter of 300 µm, for example. The coating layer 14 includes a primary resin layer 15 and a secondary resin layer 16. The primary resin layer 15 surrounds the glass fiber 10A (jacket layer 13) and covers the outer periphery of the glass fiber 10A. The primary resin layer 15 is in contact with the glass fiber 10A. The primary resin layer 15 has a thickness of 3 µm to 20 µm, for example. The primary resin layer 15 has a diameter of 210 µm, for example.

For example, the primary resin layer 15 has a Young's modulus of 0.05 MPa to 10 MPa. In this case, microbending loss can be sufficiently suppressed, and the risk of damage to the coating layer 14 can be reduced. For the primary resin layer 15, for example, a polyether-based or polyester-based urethane acrylate is used. The primary resin layer 15 may include a reactive diluent monomer or a photoinitiator. The Young's modulus of the primary resin layer 15 is controlled by, for example, the molecular weight of a polyether portion of the ultraviolet curable resin and the type of the diluent monomer.

The primary resin layer 15 contains 0.3 wt% to 2.0 wt% photoinitiator containing phosphorus, for example. The primary resin layer 15 contains, for example, polypropylene glycol having a mass-average molecular weight of 1000 to 5000. This makes it more difficult to cause delamination of an interface between the glass fiber 10A and the primary resin layer 15 and the breakage of the coating layer 14 even when the anti-resonant hollow core optical fiber 10 is subjected to an external force.

The primary resin layer 15 has an in-situ elastic modulus of 10 MPa or less, for example. The in-situ elastic modulus of the primary resin layer 15 is a Young's modulus of the primary resin layer 15 at 23°C. As an example, the primary resin layer 15 may have an in-situ elastic modulus of 0.1 MPa to 1 MPa. When the in-situ elastic modulus of the primary resin layer 15 is 0.1 MPa or more, cracks of coating called voids and delamination of coating are less likely to occur in the primary resin layer 15. When the in-situ elastic modulus of the primary resin layer 15 is 1 MPa or less, excellent side pressure resistance is achieved. The primary resin layer 15 may have an in-situ elastic modulus of 0.5 MPa or less. In this case, the microbending loss can be further reduced, and the side pressure resistance can be further improved.

In the present embodiment, the secondary resin layer 16 is the outermost layer of the coating layer 14. The secondary resin layer 16 surrounds the primary resin layer 15 and covers the outer periphery of the primary resin layer 15. The secondary resin layer 16 has a diameter of 250 µm to 300 µm, for example. For example, the thickness of the secondary resin layer 16 is twice or more the thickness of the primary resin layer 15. The secondary resin layer 16 has a thickness of 15 µm or more as an example. The secondary resin layer 16 has a Young's modulus of 1000 MPa to 3000 MPa, for example.

For the secondary resin layer 16, for example, a polyether-based or polyester-based urethane acrylate is used. The secondary resin layer 16 may include a reactive diluent monomer or a photoinitiator. The Young's modulus of the secondary resin layer 16 is controlled by, for example, the molecular weight of a polyether portion of the ultraviolet curable resin and the type of the diluent monomer.

The secondary resin layer 16 has an in-situ elastic modulus of 1500 MPa or more. For example, the in-situ elastic modulus of the secondary resin layer 16 may be 1500 MPa to 2800 MPa, or 2000 MPa to 2700 MPa. The in-situ elastic modulus of the secondary resin layer 16 is a Young's modulus of the secondary resin layer 16 at 23°C. When the in-situ elastic modulus of the secondary resin layer 16 is 1500 MPa or more, side pressure resistance can be improved. When the in-situ elastic modulus of the secondary resin layer 16 is 2800 MPa or less, appropriate toughness can be imparted to the secondary resin layer 16, and deterioration in appearance due to external damage, and cracking of the secondary resin layer 16 can be made less likely to occur.

In the present embodiment, the secondary resin layer 16 contains an inorganic oxide. For example, the inorganic oxide is nano silica. For example, the content of the inorganic oxide is 1 wt% to 50 wt% with respect to the total amount of resin compositions of the secondary resin layer 16. The inorganic oxide may be hydrophobic inorganic oxide particles. By using a resin composition containing inorganic oxide particles within the specific range, the curing shrinkage rate can be reduced, and the secondary resin layer 16 having excellent toughness can be formed. The inorganic oxide particles may be at least one selected from the group consisting of silicon dioxide (silica), zirconium dioxide (zirconia), aluminum oxide (alumina), magnesium oxide (magnesia), titanium oxide (titania), tin oxide, and zinc oxide, because they have excellent dispersibility in the resin composition and easily form a hard coating. The inorganic oxide particles may include spherical hydrophobic silica particles as the inorganic oxide particles according to the present embodiment from the viewpoint of being excellent in inexpensiveness, being easily subjected to surface treatment, having ultraviolet permeability, and being easily imparted with appropriate hardness to the resin layer.

From the viewpoint of imparting appropriate toughness to the secondary resin layer 16, the inorganic oxide particles may have an average primary particle diameter of 500 nm or less, 200 nm or less, 100 nm or less, or 50 nm or less. From the viewpoint of reducing the cure shrinkage of the secondary resin layer 16, the inorganic oxide particles may have an average primary particle diameter of 5 nm or more, or 10 nm or more. As an example, the inorganic oxide particle has an average primary particle diameter of 10 nm. The average primary particle diameter can be measured by, for example, image analysis of an electron micrograph, a light scattering method, or a BET method.

The secondary resin layer 16 contains the above-described inorganic oxide, and thus the linear expansion coefficient of the secondary resin layer 16 is reduced. The secondary resin layer 16 has an average linear expansion coefficient of 5 × 10⁻⁵ [/°C] to 10 × 10⁻⁵ [/°C] at 20°C to 30°C. The average linear expansion coefficient of the secondary resin layer 16 at 20°C to 30°C may be 6 × 10⁻⁵ [/°C] or more, or 7 × 10⁻⁵ [/°C] or more. The average linear expansion coefficient of the secondary resin layer 16 at 20°C to 30°C may be 9 × 10⁻⁵ [/°C] or less, or 8 × 10⁻⁵ [/°C] or less.

The secondary resin layer 16 has an average linear expansion coefficient of 1 × 10⁻⁵ [/°C] to 6 × 10⁻⁵ [/°C] at -60°C to -50°C. The average linear expansion coefficient of the secondary resin layer 16 at -60°C to -50°C may be 2 × 10⁻⁵ [/°C] or more, or 3 × 10⁻⁵ [/°C] or more. The average linear expansion coefficient of the secondary resin layer 16 at -60°C to -50°C may be 4 × 10⁻⁵ [/°C] or less, or 3 × 10⁻⁵ [/°C] or less.

As described above, in the anti-resonant hollow core optical fiber 10 according to the embodiment, the linear expansion coefficient of the secondary resin layer 16, which is the outermost layer of the coating layer 14, is small, and thus the phase sensitivity of the optical signal propagating through the anti-resonant hollow core optical fiber 10 can be reduced. As a result, in the anti-resonant hollow core optical fiber 10, the influence of the expansion of the coating layer 14 is reduced to suppress the phase sensitivity of the optical signal to be low.

When the secondary resin layer 16 contains nano silica, the linear expansion coefficient of the secondary resin layer 16 and the phase sensitivity of the anti-resonant hollow core optical fiber 10 can be reduced. For example, when the secondary resin layer 16 contains no nano silica, the phase sensitivity is 2.8 [rad/K/m], whereas when the secondary resin layer 16 contains nano silica, the phase sensitivity can be reduced by 5% or more depending on the content of nano silica. In the case of an application in which optical phase is controlled with high precision, such as an interferometer or sensing, it is required to reduce the phase sensitivity. In the case of the double coating having the primary resin layer 15 and the secondary resin layer 16, when the linear expansion coefficient of the secondary resin layer 16 is small, the linear expansion coefficient of the entire anti-resonant hollow core optical fiber 10 can be reduced. A transmission loss due to a side pressure applied to the anti-resonant hollow core optical fiber 10 can be reduced by having the primary resin layer 15 with a low Young's modulus. The phase sensitivity of the anti-resonant hollow core optical fiber 10 can be reduced by having the secondary resin layer 16 with a small linear expansion coefficient.

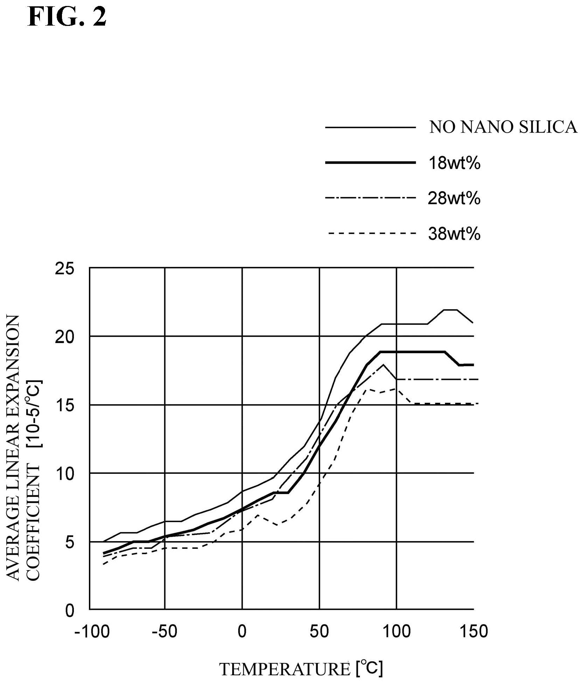

FIG. 2 is a graph showing the relationship between the temperature and the average linear expansion coefficient of the secondary resin layer 16 for each content of nano silica. The average primary particle diameter of nano silica is 10 nm. As shown in FIG. 2, the average linear expansion coefficient of the secondary resin layer 16 decreases as the content of nano silica in the secondary resin layer 16 increases. For example, the average linear expansion coefficient at 30°C when no nano silica is contained is approximately 11 × 10⁻⁵ [/°C], whereas the average linear expansion coefficient at 30°C when 18 wt% nano silica is contained is 10 × 10⁻⁵ [/°C] or less. When 18 wt% nano silica is contained, the phase sensitivity can be reduced by approximately 5% as compared with the case where no nano silica is contained.

The average linear expansion coefficient at -50°C when no nano silica is contained is approximately 7 × 10⁻⁵ [°C], whereas the average linear expansion coefficient at -50°C when 18 wt% nano silica is contained is approximately 6 × 10⁻⁵ [/°C]. The average linear expansion coefficient at -50°C when 28 wt% nano silica is contained is approximately 5 × 10⁻⁵ [/°C], and the average linear expansion coefficient at -50°C when 38 wt% nano silica is contained is approximately 4 × 10⁻⁵ [/°C]. By increasing the content of nano silica, the average linear expansion coefficient of the secondary resin layer 16 can be reduced, and the phase sensitivity of the anti-resonant hollow core optical fiber 10 can be reduced by approximately 7%.

The anti-resonant hollow core optical fiber embodiment according to the present disclosure has been described above. However, the present disclosure is not necessarily limited to the above-described embodiments, and various modifications can be made without departing from the scope of the gist described in the claims.

The above-described embodiment has described an example in which the coating layer 14 includes the primary resin layer 15 and the secondary resin layer 16, and the number of layers of the coating layer 14 is two. However, the number of layers of the coating layer 14 may be one. The secondary resin layer 16 may be provided with a colored layer (ink layer) surrounding the secondary resin layer 16.

In the above-described embodiment, the anti-resonant hollow core optical fiber 10 including the outer cladding 11, the six inner cladding elements 12, the jacket layer 13, and the coating layer 14 has been described. However, for example, the number of the inner cladding elements 12 does not have to be six, and the configuration of the anti-resonant hollow core optical fiber is not limited to the above example.

### REFERENCE SIGNS LIST

10 anti-resonant hollow core optical fiber
10A glass fiber
11 outer cladding
11b inner wall surface
11c inner region
11d core region
12 inner cladding element
13 jacket layer
14 coating layer
15 primary resin layer
16 secondary resin layer
A central axis

## Claims

1. An anti-resonant hollow core optical fiber comprising:
an outer cladding having a pipe shape;
a plurality of inner cladding elements each having a pipe shape, the plurality of inner cladding elements being in contact with an inner wall surface of the outer cladding; and
a coating layer configured to cover the outer cladding,
wherein a space surrounded by the plurality of inner claddings is a core region,
wherein an outermost layer of the coating layer has an average linear expansion coefficient of 10 × 10⁻⁵ [/°C] or less at 20°C to 30°C, and the outermost layer of the coating layer has an average linear expansion coefficient of 6 × 10⁻⁵ [/°C] or less at -60°C to -50°C, and
wherein the outermost layer of the coating layer has an in-situ elastic modulus of 1500 MPa or more.

2. The anti-resonant hollow core optical fiber according to claim 1,
wherein the coating layer has a thickness of 15 µm or more.

3. The anti-resonant hollow core optical fiber according to claim 1 or 2,
wherein the coating layer includes a primary resin layer and a secondary resin layer covering an outer periphery of the primary resin layer, and
wherein the primary resin layer has an in-situ elastic modulus of 10 MPa or less.

4. The anti-resonant hollow core optical fiber according to claim 3,
wherein the primary resin layer has a thickness of 3 µm to 20 µm.

5. The anti-resonant hollow core optical fiber according to any one of claims 1 to 4,
wherein the outermost layer of the coating layer contains an inorganic oxide.
